# EUROPÄISCHE PATENTSCHRIFT

(11) **EP 2 002 677 B1**
(45) Veröffentlichungstag und Bekanntmachung des Hinweises auf die Patenterteilung: **30.11.2016**
(21) Anmeldenummer: 07727091.6
(22) Anmeldetag: 20.03.2007
(51) Int. Cl.: H04W 52/02

(54) **VERFAHREN FÜR EINEN STROMSPARENDEN BETRIEB VON KOMMUNIKATIONSENDGERÄTEN IN EINEM KOMMUNIKATIONSSYSTEM**
METHOD FOR POWER-SAVING OPERATION OF COMMUNICATION TERMINALS IN A COMMUNICATION SYSTEM
PROCEDE POUR UN FONCTIONNEMENT A FAIBLE CONSOMMATION DE COURANT DE TERMINAUX DE COMMUNICATION DANS UN SYSTEME DE COMMUNICATION

(30) Priorität: 28.03.2006 DE 102006014680
(43) Veröffentlichungstag der Anmeldung: 17.12.2008
(73) Patentinhaber: Robert Bosch GmbH, 70442 Stuttgart (DE)
(72) Erfinder: VAN DER SCHAAR, Hans, NL-4823 Eb Breda (NL); GEERTS, Kees, NL-5103 Ta Dongen (NL)
(86) Internationale Anmeldenummer: PCT/EP2007/052614
(87) Internationale Veröffentlichungsnummer: WO 2007/110351

(56) Entgegenhaltungen:
- EP-A1- 1 158 685
- WO-A-02/087205
- WO-A-2004/034644
- DE-A1- 19 860 868
- US-A1- 2005 059 386
- US-A1- 2005 152 359
- US-A1- 2005 204 190
- US-B1- 6 671 520

## Beschreibung

### Stand der Technik

Die Erfindung betrifft ein Verfahren für einen stromsparenden Betrieb von Kommunikationsendgeräten in einem Kommunikationssystem, insbesondere in einem drahtlosen Kommunikationssystem, sowie eine Zentrale und ein Kommunikationsendgerät und deren Verwendung in einem Konferenzsystem, insbesondere in einem drahtlosem Konferenzsystem.

Aus der deutschen Offenlegungsschrift DE 198 60 868 A1 ist ein Verfahren für einen stromsparenden Betrieb von Kommunikationsendgeräten in einem Kommunikationssystem bekannt. Ferner ist aus der DE 198 60 868 A1 bekannt, dass eine Zentrale die Kommunikationsendgeräte in einen Aktivmodus versetzt. Auch ist bekannt, dass die Zentrale eine Nachricht sendet, dass ein Kommunikationsendgerät weiterschlafen kann.

Die Druckschrift EP 1 158 685 A1offenbart ebenfalls ein System, bei dem Teilnehmer in einen Standbymodus geschaltet werden können, wobei die zeitliche Länge des Standbymodus fest vorgegeben ist.
Die Druckschrift WO02/087205 A1, die den nächstkommenden Stand der Technik bildet, betrifft ein kabelloses Koriferenztelefonsystem oder ein entsprechendes Audiosystem, welches mindestens eine Audioeinheit mit einem Mikrofon und/oder einen Lautsprecher sowie eine Kontrolleinheit aufweist. Die mindestens eine Audioeinheit wird durch die Kontrolleinheit gesteuert, wobei hierfür ein kabelloses Protokoll wie z.B. WAP zum Einsatz kommt. Über das kabellose Protokoll werden eine Vielzahl von Kontrollbefehlen an die Audioeinheiten und in Gegenrichtung übertragen. Unter anderem werden auch die Befehle zum Wechsel in einen Standby-Betrieb und in einen ON-Betrieb übertragen.

### Offenbarung der Erfindung

### Vorteile der Erfindung

Das nachfolgend beschriebene Verfahren für einen stromsparenden Betrieb von Kommunikationsendgeräten in einem Kommunikationssystem gemäß dem unabhängigen Anspruch 1 hat den Vorteil, dass der Stromverbrauch von Kommunikationsendgeräten gesenkt wird und damit die Verfügbarkeit der Kommunikationsendgeräte erhöht wird. Andererseits hat das Verfahren den Vorteil, dass ein normaler Betriebszustand mit der vollen Funktionalität der Kommunikationsendgeräte schnell herstellbar ist. Dies wird in vorteilhafter Weise dadurch erreicht, dass ein durch die Stromaufnahme gekennzeichneter Betriebszustand der Kommunikationsendgeräte durch eine Eingabe eines Benutzers des Kommunikationssystems geändert werden kann. Hierbei ist besonders vorteilhaft, dass die Zentrale die Kommunikationsendgeräte in den stromsparenden Betriebszustand der Bereitschaft versetzen, da hierdurch zentral die Kommunikationsendgeräte in einen Ruhezustand (sleep mode) versetzt werden können. Vorteilhaft ist insbesondere, dass diese Änderungen des durch die Stromaufnahme gekennzeichneten Betriebszustandes für alle an das Kommunikationssystem angeschlossene Kommunikationsendgeräte simultan, also gleichzeitig, erfolgt.

Besonders vorteilhaft ist, wenn die Benutzereingabe in der Zentrale direkt erfolgt, da hierdurch das Verfahren besonders schnell ausgeführt werden kann. Die Benutzereingabe in einem an die Zentrale angeschlossen Rechner hat den Vorteil, dass das Verfahren ferngesteuert von einem entfernt angeordneten Arbeitsplatz durchgeführt werden kann.

Vorteilhaft ist, dass die Benutzereingabe in einem Kommunikationsendgerät erfolgt, wobei die von dem Kommunikationsendgerät an die Zentrale gesendete Mitteilung die Zentrale veranlasst, die weiteren Kommunikationsendgeräte in einen stromsparenden Betriebszustand Bereitschaft zu versetzen, da hierdurch gewährleistet ist, dass auch ferngesteuert durch einzelne Kommunikationsendgeräte das gesamte Kommunikationssystem in einen stromsparenden Betrieb versetzt werden kann ohne dass dies durch manuellen Eingriff in die Zentrale erfolgen muss.

Besonders vorteilhaft ist, dass die Benutzereingabe in einem Kommunikationsendgerät erfolgt, wobei die von dem Kommunikationsendgerät an die Zentrale gesendete Mitteilung die Zentrale veranlasst, die weiteren Kommunikationsendgeräte von einem stromsparenden Betriebszustand Bereitschaft in einen Betriebszustand Normalbetrieb zu versetzen, da hierdurch gewährleistet ist, dass jedes Kommunikationsendgerät bei Bedarf das gesamte Kommunikationssystem wieder zurück in den Normalbetrieb versetzen kann.

Die vorstehend genannten Vorteile des Verfahrens gelten auch entsprechend für die erfindungsgemäße Zentrale und die erfindungsgemäße Verwendung gemäss den Ansprüchen 11 und 12. Besonders vorteilhaft ist Verwendung der Zentrale und des Kommunikationsendgerätes mit dem erfindungsgemäßen Verfahren in einem drahtlosen Konferenzsystem, wobei das Kommunikationsendgerät als Teilnehmereinheit und/oder Vorsitzendeneinheit ausgebildet ist, da bei Konferenzsystemen einerseits eine lange Betriebsbereitschaft der drahtlosen Teilnehmereinheiten und der drahtlosen Vorsitzendeneinheit zu einer hohen Akzeptanz des Konferenzsystems beiträgt.

Weitere Vorteile ergeben sich aus der nachfolgenden Beschreibung von Ausführungsbeispielen mit Bezug auf die Figuren und aus den abhängigen Ansprüchen.

### Zeichnung

Die Erfindung wird nachstehend anhand der in der Zeichnung dargestellten Ausführungsform näher erläutert.

Es zeigen:
- - Figur 1: ein Blockschaltbild,
- - Figur 2: ein Zustandsdiagramm,
- - Figur 3: ein Ablaufdiagramm.

### Beschreibung von Ausführungsbeispielen

Nachfolgend wird ein Verfahren für einen stromsparenden Betrieb von Kommunikationsendgeräten in einem Kommunikationssystem, insbesondere in einem drahtlosen Kommunikationssystem, beschrieben, wobei in Abhängigkeit einer Benutzereingabe eine Zentrale des Kommunikationssystems eine Änderung eines durch die Stromaufnahme gekennzeichneten Betriebszustandes der Kommunikationsendgeräte des Kommunikationssystems veranlasst. Im nachfolgend beschriebenen bevorzugten Ausführungsbeispiel kommt das Verfahren in drahtlosen Konferenzsystemen zum Einsatz, wobei das Kommunikationsendgerät als Teilnehmereinheit und/oder Vorsitzendeneinheit ausgebildet ist.

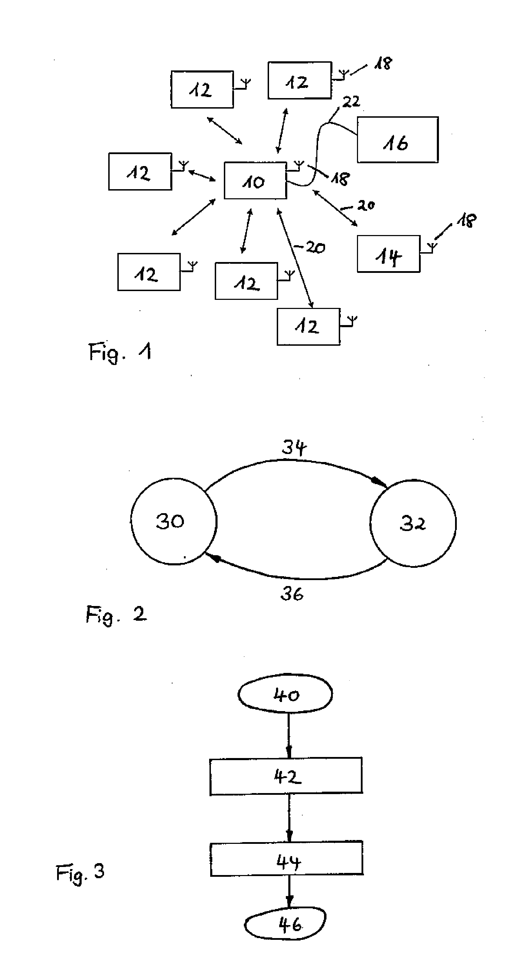

Figur 1 zeigt ein Blockschaltbild eines drahtlosen Konferenzsystems des bevorzugten Ausführungsbeispiels, umfassend eine Zentrale 10, eine Mehrzahl an Teilnehmereinheiten 12 und eine Vorsitzendeneinheit 14 als Kommunikationsendgeräte. Konferenzsysteme sind hierbei Einrichtung, die Teilnehmer von Diskussionen, Versammlungen und Kongresse durch technische Maßnahmen unterstützen. Teilnehmereinheiten 12 und auch die Vorsitzendeneinheiten 14 weisen als Grundausstattung einen Lautsprecher und ein Mikrofon auf. Teilnehmer geben ihre Wortmeldung ab, indem sie eine an der Teilnehmereinheit 12 befindliche Mikrofontaste drücken. Über das Mikrofon der Teilnehmereinheit 12 wird der Wortbeitrag eines Teilnehmers an die Lautsprecher der weiteren Teilnehmereinheiten 12 der anderen Teilnehmern übertragen. Der Vorsitzende bedient eine Vorsitzendeneinheit 14, die ihm die Möglichkeit bietet, den Ablauf der Veranstaltung zu leiten und zu steuern. Hierzu stellt die Vorsitzendeneinheit 14 dem Vorsitzenden beispielsweise die Möglichkeit zur Verfügung, Wortmeldungen zu registrieren, aber auch gegebenenfalls die übrigen Teilnehmer zu unterbrechen, indem er eine Vorrangtaste seiner Vorsitzendeneinheit 14 betätigt. In weiteren Ausgestaltungen des Konferenzsystems ermöglichen die Teilnehmereinheiten 12 im Zusammenspiel mit der Zentrale 10 und der Vorsitzendeneinheit 14 beispielsweise elektronische Abstimmungen und den Betrieb mit Dolmetschern. Im bevorzugten Ausführungsbeispiel ist das Konferenzsystem als drahtloses Kommunikationssystem ausgeführt. Die Teilnehmereinheiten 12 und die Vorsitzendeneinheit 14 als Kommunikationsendgeräte sind mit der Zentrale 10 über eine drahtlose Verbindung 20, die im bevorzugten Ausführungsbeispiel als Funkverbindung ausgeführt ist, verbunden. Als Kommunikationsprotokoll der Funkverbindung sind neben proprietären Protokollen auch standardisierte Kommunikationsprotokolle, wie WLAN (wireless local area network) und Bluetooth, einsetzbar. Hierzu weisen sowohl die Teilnehmereinheiten 12 und die Vorsitzendeneinheit 14, als auch die Zentrale 10 eine Antenne 18 auf. Im bevorzugten Ausführungsbeispiel sind die Teilnehmereinheiten 12 und die Vorsitzendeneinheit 14 batteriebetrieben. Alternativ ist vorgesehen, die Kommunikationsendgeräte anstatt einer Batterie mit einem wiederaufladbaren Akkumulator auszustatten. Ferner zeigt Figur 1 einen Rechner 16, der mit der Zentrale 10 über eine drahtgebundene Verbindung 22, beispielsweise eine LAN-Verbindung (local area network), verbunden ist. Über die drahtlose Verbindung 20 werden Audiosignale, also die Sprachebeiträge der Teilnehmer, von den Teilnehmereinheiten 12 oder der Vorsitzendeneinheit 14 über die Zentrale 10 zu den weiteren Teilnehmereinheiten 12 und der Vorsitzendeneinheit 14 übertragen. Ferner wird die drahtlose Verbindung 20 dazu genutzt, Daten zwischen den Teilnehmereinheiten 12, der Vorsitzendeneinheit 14 und der Zentrale 10 zu übertragen. Als Daten werden beispielsweise Wortmeldungen der Teilnehmer versendet. Daneben dient die drahtlose Verbindung 20 dazu, Steuerdaten zwischen den Teilnehmereinheiten 12, der Vorsitzendeneinheit 14 und der Zentrale 10 zu übertragen. Beispielsweise sendet die Zentrale 10 mittels des Kommunikationsprotokolls Mitteilungen an die Teilnehmereinheiten 12 und die Vorsitzendeneinheit 14, die bewirken, dass die Kommunikationsendgeräte in einen Bereitschaftszustand (sleep modus) als Betriebszustand übergehen. Hierzu ist im Kommunikationsprotokoll eine Status-Bit im Protokoll-Header vorgesehen, wobei dieses Status-Bit kennzeichnet, ob die Kommunikationsendgeräte im Ruhezustand (Betriebszustand Bereitschaft, sleep mode) oder im Normalbetrieb sein sollen. Im Betriebszustand Bereitschaft der Teilnehmereinheiten 12 und der Vorsitzendeneinheit 14 sind deren Eingabeeinheiten und/oder die Ausgabeeinheiten und die zur Bereitstellung der Eingabe und Ausgabe notwendige Verarbeitungseinheiten der Teilnehmereinheiten 12 und der Vorsitzendeneinheit 14 außer Funktion, so dass hierdurch ein stromsparender Betrieb gewährleistet ist und die Stromendnahme der Batterie oder des Akkumulators reduziert ist. In diesem Betriebszustand Bereitschaft überprüfen die Teilnehmereinheiten 12 und die Vorsitzendeneinheit 14 in regelmäßigen Abständen, ob sie weiterhin in diesem stromsparenden Betriebszustand verbleiben sollen oder nicht. Dies geschieht indem die Kommunikationsendgeräte das hierfür vorgesehene Status-Bit des Protokoll-Headers auslesen. Um die Teilnehmereinheiten 12 und die Vorsitzendeneinheit 14 aufzuwecken, also vom Betriebszustand Bereitschaft in den Betriebszustand Normalbetrieb zu überführen, sendet die Zentrale 10 eine Mitteilung mittels des Kommunikationsprotokolls über die drahtlose Verbindung 20 an die Teilnehmereinheiten 12 und/oder die Vorsitzendeneinheit 14. Diese Mitteilung veranlasst diese Kommunikationsendgeräte den Betriebszustand der Bereitschaft zu lassen und in den Normalbetrieb zu wechseln. Der Normalbetrieb ist dabei der Betriebszustand in dem die Funktionalität des Konferenzsystems den Teilnehmers zur Verfügung steht, also insbesondere die Eingabeeinheiten und die Ausgabeeinheiten der Teilnehmereinheiten 12 und der Vorsitzendeneinheit 14 aktiv sind. Der Vorsitzende oder ein anderer autorisierter Benutzer des Konferenzsystems kann die Steuerung des Betriebszustandes der Teilnehmereinheiten 12 und/oder der Vorsitzendeneinheit 14 entweder an der Zentrale 10 direkt vornehmen oder ferngesteuert über den mit der Zentrale 10 verbundenen Rechner 16. Im bevorzugten Ausführungsbeispiel weist sowohl die Zentrale 10 als auch der an die Zentrale 10 angeschlossene Rechner 16 eine Eingabemöglichkeit für den Benutzer des Konferenzsystems auf. Die Zentrale verfügt im bevorzugten Ausführungsbeispiel über zwei Taster, wobei durch Betätigen eines ersten Taster eine Benutzereingabe derart erfolgt, dass die angeschlossenen Teilnehmereinheiten 12 und die Vorsitzendeneinheit 14 in einen stromsparenden Betriebszustand Bereitschaft versetzt werden. Durch Betätigen des zweiten Taster erfolgt eine Benutzereingabe derart, dass die angeschlossenen Teilnehmereinheiten 12 und die Vorsitzendeneinheit 14 aus dem stromsparenden Betriebszustand Bereitschaft in den Betriebszustand Normalbetrieb aufgeweckt werden. Ferner sind die Zentrale 10, die Teilnehmereinheiten 12 und die Vorsitzendeneinheit 14 zur Durchführung des mit Bezug auf Figur 3 beschriebenen Verfahrens ausgebildet, insbesondere weisen diese hierfür notwendige Verarbeitungseinheiten in Form von Mikroprozessoren und Speichern auf.

Figur 2 zeigt ein Zustandsdiagramm der Teilnehmereinheiten und/oder der Vorsitzendeneinheit des bevorzugten Ausführungsbeispiels, wobei das Zustanddiagramm zwei Betriebszustände umfasst. Im Betriebszustand der Bereitschaft 30 sind die Teilnehmereinheiten und/oder die Vorsitzendeneinheit in einem stromsparenden Modus, indem einige ihrer Funktionen und damit die zur Bereitstellung dieser Funktionen notwendigen technischen Einheiten ausgeschaltet sind. Durch eine Zustandsänderung 34, initiiert durch eine Mitteilung der Zentrale, wird der Betriebszustand von der Bereitschaft 30 zum Normalbetrieb 32 gewechselt. Durch eine erneute Zustandsänderung 36 erfolgt die Änderung des Betriebszustandes Normalbetrieb 32 zum Betriebszustand Bereitschaft 30.

Figur 3 zeigt ein Ablaufdiagramm des Verfahrens des bevorzugten Ausführungsbeispiels. Das Verfahren beginnt mit dem Start 40. Im ersten Verfahrenschritt 42 wird entweder direkt in der Zentrale oder dem angeschlossenen Rechner, beispielsweise durch Betätigen eines Tasters, eine Benutzereingabe durch einen Benutzer des Kommunikationssystems durchgeführt oder die Zentrale erhält von einer Teilnehmereinheit und/oder von der Vorsitzendeneinheit eine Mitteilung über die drahtlose Verbindung dergestalt, dass eine Benutzereingabe erfolgt ist. In der ersten Variante bedeutet die Benutzereingabe, dass die weiteren Teilnehmereinheiten oder die Vorsitzendeneinheit von dem aktuellen stromsparenden Betriebszustand Bereitschaft in den Betriebszustand Normalbetrieb zu versetzen sind. In einer zweiten Variante bedeutet die Benutzereingabe, dass die weiteren Teilnehmereinheiten oder die Vorsitzendeneinheit von dem aktuellen Betriebszustand Normalbetrieb in den stromsparenden Betriebszustand Bereitschaft zu versetzen sind. Bei der zweiten Variante ist bei der Benutzereingabe in ein Teilnehmerendgerät gewährleistet, dass dieser Übergang des Betriebszustandes in die Bereitschaft nur von autorisierten Benutzern veranlasst wird. Dies wird gewährleistet, indem eine codierende Tastenkombination in das Kommunikationsendgerät einzugeben ist. Vorzugsweise wird dieser Übergang des Betriebszustandes nur durch die Vorsitzendeneinheit veranlasst. Im zweiten Verfahrensschritt 44 sendet die Zentrale veranlasst von der empfangenen Mitteilung oder der in die Zentrale oder einen Rechner erfolgte Benutzereingabe eine Mitteilung an die Teilnehmereinheiten und/oder die Vorsitzendeneinheit, einschließend des Kommunikationsendgerätes, das die Mitteilung gesendet hat, um die Teilnehmereinheiten und/oder die Vorsitzendeneinheit entsprechend in den gewünschten Betriebszustand Bereitschaft und/oder Normalbetrieb zu versetzen. Das Verfahren wird durch das Ende 46 abgeschlossen.

Vorzugsweise kommt das beschriebene Verfahren entsprechend dem vorstehend beschriebenen Ausführungsbeispiel in drahtlosen Konferenzsystemen zum Einsatz. Jedoch ist das Verfahren weder auf drahtlose Kommunikationssysteme beschränkt und kann insbesondere auch bei drahtgebundenen Kommunikationssystemen zum Einsatz kommen, noch ist das Verfahren auf Konferenzsystem beschränkt, sondern kann allgemein bei Kommunikationssystemen zum Einsatz kommen.

## Patentansprüche

1. Verfahren für einen stromsparenden Betrieb von Kommunikationsendgeräten (12, 14) in einem drahtlosen Kommunikationssystem, wobei in Abhängigkeit einer Benutzereingabe eine Zentrale (10) des Kommunikationssystems eine Änderung eines durch die Stromaufnahme gekennzeichneten Betriebszustandes der Kommunikationsendgeräte (12, 14) des Kommunikationssystems veranlasst,
**dadurch gekennzeichnet,**
**dass** die Zentrale (10) mittels eines Kommunikationsprotokolls Mitteilungen an die Kommunikationsendgeräte (12, 14) sendet, wobei in dem Kommunikationsprotokoll ein Status-Bit in einem Protokoll-Header vorgesehen ist, wobei dieses Status-Bit kennzeichnet, ob die Kommunikationsendgeräte (12, 14) im Ruhezustand als Betriebszustand Bereitschaft oder im Betriebszustand Normalbetrieb sein sollen, und
**dass** die Kommunikationsendgeräte (12, 14) im Betriebszustand Bereitschaft in regelmäßigen Abständen überprüfen, ob sie weiterhin in diesem Betriebszustand verbleiben sollen, indem die Kommunikationsgeräte (12, 14) das Status-Bit des Protokoll-Headers auslesen.

2. Verfahren nach Anspruch 1, **dadurch gekennzeichnet, dass** die Zentrale (10) die Kommunikationsendgeräte (12, 14) in einen stromsparenden Betriebszustand Bereitschaft (30) versetzt.

3. Verfahren nach Anspruch 1, **dadurch gekennzeichnet, dass** die Zentrale (10) die Kommunikationsendgeräte (12, 14) von einem stromsparenden Betriebszustand Bereitschaft (30) in einen Betriebszustand Normalbetrieb (32) versetzt.

4. Verfahren nach einem der vorhergehenden Ansprüche, **dadurch gekennzeichnet, dass** die Benutzereingabe in der Zentrale (10) oder in einem mit der Zentrale (10) verbundenen Rechner (16) erfolgt.

5. Verfahren nach Anspruch 1, **dadurch gekennzeichnet, dass** die Benutzereingabe in einem Kommunikationsendgerät (12, 14) erfolgt, wobei das Kommunikationsendgerät (12, 14) daraufhin eine Mitteilung an die Zentrale (10) sendet, wobei die Mitteilung die Zentrale (10) veranlasst, einen durch die Stromaufnahme gekennzeichneten Betriebszustand von weiteren Kommunikationsendgeräten (12, 14) zu ändern.

6. Verfahren nach Anspruch 5, **dadurch gekennzeichnet, dass** die von dem Kommunikationsendgerät (12, 14) an die Zentrale (10) gesendete Mitteilung die Zentrale (10) veranlasst, die weiteren Kommunikationsendgeräte (12, 14) in einen stromsparenden Betriebszustand Bereitschaft (30) zu versetzen.

7. Verfahren nach Anspruch 6, **dadurch gekennzeichnet, dass** die Zentrale (10) aufgrund der empfangenen Mitteilung eine weitere Mitteilung an die weiteren Kommunikationsgeräte (12, 14) sendet, die daraufhin in den stromsparenden Betriebszustand Bereitschaft (30) wechseln.

8. Verfahren nach Anspruch 5, **dadurch gekennzeichnet, dass** die von dem Kommunikationsendgerät (12, 14) an die Zentrale (10) gesendete Mitteilung die Zentrale (10) veranlasst, die weiteren Kommunikationsendgeräte (12, 14) von einem stromsparenden Betriebszustand Bereitschaft (30) in einen Betriebszustand Normalbetrieb (32) zu versetzen.

9. Verfahren nach Anspruch 8, **dadurch gekennzeichnet, dass** die Zentrale (10) aufgrund der empfangenen Mitteilung eine weitere Mitteilung an die weiteren Kommunikationsgeräte (12, 14) sendet, die daraufhin von dem stromsparenden Betriebszustand Bereitschaft (30) in den Betriebszustand Normalbetrieb (32) wechseln. 1,

10. Verfahren nach einem der Ansprüche 2, 3, 6, 7, 8 oder 9, **dadurch gekennzeichnet, dass** im stromsparenden Betriebszustand Bereitschaft (30) Eingabeeinheiten und/oder Ausgabeeinheiten der Kommunikationsendgeräte (12, 14) außer Funktion sind.

11. Zentrale (10), mit Mitteln zur Durchführung des Verfahrens nach einem der Ansprüche 1 bis 10, **dadurch gekennzeichnet, dass** die Zentrale (10) derart konfiguriert ist, dass die Zentrale (10) in Abhängigkeit einer Benutzereingabe eine Änderung eines durch die Stromaufnahme gekennzeichneten Betriebszustandes von Kommunikationsendgeräte (12, 14) des Kommunikationssystems veranlasst.

12. Verwendung einer Zentrale (10) nach Anspruch 11 in einem Konferenzsystem, in einem drahtlosem Konferenzsystem, wobei ein Kommunikationsendgerät (12, 14) als Teilnehmereinheit und/oder Vorsitzendeneinheit ausgebildet ist.

## Claims

1. Method for power-saving operation of communication terminals (12, 14) in a wireless communication system, wherein a user input is taken by a control centre (10) of the communication system as a basis for prompting a change of an operating state of the communication terminals (12, 14) of the communication system, which operating state is **characterized by** the power consumption,
**characterized**
**in that** the control centre (10) uses a communication protocol to send messages to the communication terminals (12, 14), wherein there is, in the communication protocol, a status bit provided in a protocol header, wherein this status bit characterizes whether the communication terminals (12, 14), in the idle state, are meant to be in standby as an operating state or in the normal operation operating state, and in that the communication terminals (12, 14), in the standby operating state, check at regular intervals whether they are meant to continue to remain in this operating state by virtue of the communication terminals (12, 14) reading the status bit of the protocol header.

2. Method according to Claim 1, **characterized in that** the control centre (10) puts the communication terminals (12, 14) into a power-saving standby operating state (30).

3. Method according to Claim 1, **characterized in that** the control centre (10) takes the communication terminals (12, 14) from a power-saving standby operating state (30) to a normal operation operating state (32).

4. Method according to one of the preceding claims, **characterized in that** the user input is made in the control centre (10) or in a computer (16) connected to the control centre (10).

5. Method according to Claim 1, **characterized in that** the user input is made in a communication terminal (12, 14), wherein the communication terminal (12, 14) then sends a message to the control centre (10), wherein the message prompts the control centre (10) to change an operating state of further communication terminals (12, 14) that is **characterized by** the power consumption.

6. Method according to Claim 5, **characterized in that** the message sent from the communication terminal (12, 14) to the control centre (10) prompts the control centre (10) to put the further communication terminals (12, 14) into a power-saving standby operating state (30).

7. Method according to Claim 6, **characterized in that** the control centre (10) takes the received message as a basis for sending a further message to the further communication terminals (12, 14), which then change to the power-saving standby operating state (30).

8. Method according to Claim 5, **characterized in that** the message sent from the communication terminal (12, 14) to the control centre (10) prompts the control centre (10) to take the further communication terminals (12, 14) from a power-saving standby operating state (30) to a normal operation operating state (32).

9. Method according to Claim 8, **characterized in that** the control centre (10) takes the received message as a basis for sending a further message to the further communication terminals (12, 14), which then change from the power-saving standby operating state (30) to the normal operation operating state (32).

10. Method according to one of Claims 1, 2, 3, 6, 7, 8 or 9, **characterized in that** in the power-saving standby operating state (30), input units and/or output units of the communication terminals (12, 14) are out of operation.

11. Control centre (10), having means for performing the method according to one of Claims 1 to 10, **characterized in that** the control centre (10) is configured such that the control centre (10) takes a user input as a basis for prompting a change of an operating state of communication terminals (12, 14) of the communication system, which operating state is **characterized by** the power consumption.

12. Use of a control centre (10) according to Claim 11 in a conference system, in a wireless conference system, wherein a communication terminal (12, 14) is in the form of a participant unit and/or chairman unit.

## Revendications

1. Procédé pour le fonctionnement à faible consommation de courant de terminaux de communication (12, 14) dans un système de communication sans fil, dans lequel une centrale (10) du système de communication provoque, en fonction d'une entrée de l'utilisateur, une modification d'un état de fonctionnement des terminaux de communication (12, 14) du système de communication, lequel état de fonctionnement est **caractérisé par** la consommation de courant,
**caractérisé en ce que** la centrale (10) transmet au terminaux de communication (12, 14) des messages au moyen d'un protocole de communication, dans lequel il est prévu dans le protocole de communication un bit d'état contenu dans un entête de protocole, dans lequel ledit bit d'état détermine si les terminaux de communication (12, 14) doivent être dans l'état de repos en tant qu'état de fonctionnement prêt, ou dans un état de fonctionnement de mode de fonctionnement normal, et
**en ce que** les terminaux de communication (12, 14) dans l'état de fonctionnement prêt, vérifient, à des intervalles réguliers, s'ils doivent en outre rester dans ledit état de fonctionnement en faisant en sorte que les terminaux de communication (12, 14) lisent le bit d'état de l'entête de protocole.

2. Procédé selon la revendication 1, **caractérisé en ce que** la centrale (10) fait passer les terminaux de communication (12, 14) dans un état de fonctionnement prêt à faible consommation d'énergie (30).

3. Procédé selon la revendication 1, **caractérisé en ce que** la centrale (10) fait passer les terminaux de communication (12, 14) de l'état de fonctionnement prêt à faible consommation d'énergie (30) à un état de fonctionnement de mode de fonctionnement normal (32).

4. Procédé selon l'une quelconque des revendications précédentes, **caractérisé en ce que** l'entrée de l'utilisateur est effectuée sur la centrale (10) ou sur un calculateur (16) connecté à la centrale (10).

5. Procédé selon la revendication 1, **caractérisé en ce que** l'entrée de l'utilisateur est effectuée sur un terminal de communication (12, 14), dans lequel le terminal de communication (12, 14) transmet après cela un message à la centrale (10), dans lequel le message amène la centrale (10) à modifier un état de fonctionnement d'autres terminaux de communication (12, 14), lequel état de fonctionnement est **caractérisé par** la consommation de courant.

6. Procédé selon la revendication 5, **caractérisé en ce que** le message transmis par le terminal de communication (12, 14) à la centrale (10) amène la centrale (10) à faire passer les autres terminaux de communication (12, 14) dans un état d'attente de fonctionnement prêt à faible consommation d'énergie (30).

7. Procédé selon la revendication 6, **caractérisé en ce que** la centrale (10) transmet aux autres terminaux de communication (12, 14) un autre message, sur la base du message reçu, lesquels terminaux de communication basculent ensuite dans l'état de fonctionnement prêt à faible consommation d'énergie (30).

8. Procédé selon la revendication 5, **caractérisé en ce que** le message transmis par le terminal de communication (12, 14) à la centrale (10) amène la centrale (10) à faire passer les autres terminaux de communication (12, 14) de l'état de fonctionnement prêt à faible consommation d'énergie (30) à un état de fonctionnement de mode de fonctionnement normal (32).

9. Procédé selon la revendication 8, **caractérisé en ce que** la centrale (10) transmet, sur la base du message reçu, un autre message aux autres terminaux de communication (12, 14), lesquels terminaux de communication basculent après cela de l'état de fonctionnement prêt à faible consommation d'énergie (30) à l'état de fonctionnement de mode de fonctionnement normal (32).

10. Procédé selon l'une quelconque des revendications 1, 2, 3, 6, 7, 8 ou 9, **caractérisé en ce que**, dans l'état de fonctionnement prêt à faible consommation d'énergie (30), des unités d'entrée et/ou des unités de sortie des terminaux de communication (12, 14) ne sont pas fonctionnelles.

11. Centrale (10) comportant des moyens destinés à mettre en oeuvre le procédé selon l'une quelconque des revendications 1 à 10, **caractérisé en ce que** la. centrale (10) est configurée de manière à ce que la centrale (10) provoque, en fonction d'une entrée de l'utilisateur, une modification d'un état de fonctionnement de terminaux de communication (12, 14) du système de communication, lequel état de fonctionnement est **caractérisé par** la consommation de courant.

12. Utilisation d'une centrale (10) selon la revendication 11 dans un système de conférence d'un système de conférence sans fil, dans lequel un terminal de communication (12, 14) est réalisé sous la forme d'une unité de participant et/ou d'une unité de président de session.
